# EUROPEAN PATENT APPLICATION

(11) **EP 4 435 801 A1**
(43) Date of publication of application: **25.09.2024**
(21) Application number: 22895498.8
(22) Date of filing: 09.11.2022
(51) Int. Cl.: G21F 1/10, G21F 3/00

(54) **NEUTRON SHIELDING MATERIAL AND METHOD FOR PRODUCING SAME**

(30) Priority: 16.11.2021 JP 2021186130
(71) Applicant: Kyoto University, Kyoto-shi, Kyoto 606-8501 (JP); Stella Chemifa Corporation, Osaka-shi, Osaka 541-0044 (JP)
(72) Inventor: TANAKA, Hiroki, Kyoto-shi, Kyoto 606-8501 (JP); SATO, Yoshinori, Izumiotsu-shi, Osaka 595-0075 (JP); YAMAMOTO, Masashi, Izumiotsu-shi, Osaka 595-0075 (JP); NII, Keiichi, Izumiotsu-shi, Osaka 595-0075 (JP); NISHIDA, Tetsuo, Izumiotsu-shi, Osaka 595-0075 (JP)
(74) Representative: Meissner Bolte Partnerschaft mbB
(86) International application number: PCT/JP2022/041673
(87) International publication number: WO 2023/090216

(57) **Abstract**

Provided is a neutron shielding material having good light transparency and excellent shielding performance against thermal neutron rays, and a method for producing the same. A neutron shielding material according to the present invention includes a light transmitting material and a boron compound enriched in a boron isotope having a mass number of 10, the neutron shielding material being formed of a molded product having light transparency. Shielding performance against thermal neutron rays is improved by containing a boron compound enriched in a boron isotope having a mass number of 10. As a result, the neutron shielding material can be widely applied to members requiring visibility and neutron blocking properties.

## Description

### TECHNICAL FIELD

The present invention relates to a neutron shielding material and a method for producing the same, and more specifically to a neutron shielding material having good light transparency and excellent shielding performance against thermal neutron rays and a method for producing the same.

### BACKGROUND ART

Since a neutron ray has a very large energy dependency of a dose conversion coefficient, a fast neutron ray having high energy has a very large influence on external exposure of a human body. Thus, in nuclear power facilities and nuclear fusion facilities such as nuclear reactors and fast reactors, neutron ray treatment facilities for treating affected areas, and the like, it is an important issue to appropriately shield neutron rays and protect workers and the like.

In particular, it is desired to develop a molded protective article having excellent shielding performance against neutron rays and excellent visibility and light transparency for a monitoring unit (inspection window) required for remote control or the like, a safety management tool for an operator, a camera (for example, a camera for observing workers, emergency shelters, vehicles, and the like in the event of an emergency or the like, and a camera for observing patients under treatment in a neutron ray treatment facility for treating affected areas), and the like.

In general, to shield a fast neutron ray, it is effective to elastically scattering the fast neutron ray with an atom of light mass such as a hydrogen atom, thereby decelerating the fast neutron ray, and this fact is known. Thus, a high-hydrogen-containing material that is inexpensive and easy to handle is used as a neutron shielding material. As the high-hydrogen-containing material, a hydrocarbon-based compound having a relatively large number of hydrogen atoms, more specifically, for example, an acrylic resin, a polyethylene resin, an epoxy resin, and paraffins are used.

Further, to shield a thermal neutron ray decelerated by a neutron shielding material, it is effective to absorb the thermal neutron ray with an element having a large neutron capture sectional area. Examples of the element having a large neutron capture sectional area include ³He, ⁶Li, and ¹⁰B.

Patent Document 1 discloses a transparent resin composition for a neutron shielding material containing an epoxy resin and an amine curing agent as essential components. In Patent Document 1, by using an epoxy resin having an alicyclic skeleton as the epoxy resin and using an alicyclic diamine curing agent as the amine curing agent, the number density of hydrogen atoms is set to 6.78 × 10²² atom/cm³ or more, and the shielding performance against fast neutron rays is improved. However, the resin composition for a neutron shielding material disclosed in Patent Document 1 exhibits a certain effect on the deceleration of fast neutron rays, but does not contain an element that efficiently absorbs decelerated thermal neutron rays, and thus it cannot be said that the thermal neutron ray shielding performance is sufficient.

Patent Document 2 discloses a neutron shielding material obtained by curing a mixture containing an epoxy resin, polyethylene, and an inorganic boron compound with an amine-based curing agent. However, this neutron shielding material is poor in visibility because of insufficient light transparency.

### PRIOR ART DOCUMENT

### PATENT DOCUMENTS

Patent Document 1: WO 2017/213265 A1
Patent Document 2: JP H04-67160 B

### SUMMARY OF THE INVENTION

### PROBLEMS TO BE SOLVED BY THE INVENTION

The present invention has been made in view of the above problems, and an object of the present invention is to provide a neutron shielding material having good light transparency and excellent shielding performance against thermal neutron rays, and a method for producing the same.

### SOLUTIONS TO THE PROBLEMS

To solve the problem, a neutron shielding material according to the present invention comprises a light transmitting material and a boron compound enriched in a boron isotope having a mass number of 10, the neutron shielding material being formed of a molded product having light transparency.

The boron compound in the above configuration is a compound enriched in a boron (¹⁰B) isotope having a mass number of 10 and a natural abundance of 19.9 %. Thus, as compared with the case of using a boron compound containing ¹¹B present at a natural abundance of 80.1 %, excellent shielding performance against thermal neutron rays can be exhibited while suppressing the content of boron (that is, the boron compound). By suppressing the content of the boron compound, it is also possible to suppress a decrease in light transparency caused by containing the boron compound. As a result, according to the above configuration, it is possible to provide a neutron shielding material having good light transparency and excellent shielding performance against thermal neutron rays.

In the above configuration, it is preferred that an enrichment degree of a boron isotope having a mass number of 10 in the boron compound is 50 % or more. This makes it possible to reduce the content proportion of the boron compound of the ¹¹B isotope, leading to further suppression of the content of the boron compound and further improvement of the light transparency. The shielding performance against thermal neutron rays can also be further improved.

In the above configuration, it is preferred that a content of the boron compound is 0.001 mass% or more and 30 mass% or less in terms of boron atom with respect to a total mass of the neutron shielding material. Setting the content of the boron compound to 0.001 mass% or more makes it possible to maintain good shielding performance against thermal neutron rays. On the other hand, setting the content of the boron compound to 30 mass% or less makes it possible to maintain good light transparency.

In the above configuration, it is preferred that the boron compound is at least one selected from a group consisting of a boron oxide, a boric acid, borane, boroxine, boron trihalide, an inorganic borate, a boron fluoride, a boride, a borohydride compound, a hetero compound, a boronic acid, an organic borate, a boric acid ester, a borinic acid ester, a boronic acid ester, an organic borane, a carborane, a carboronic acid, and a boron-containing complex compound.

In the above configuration, it is preferred that the light transmitting material is any one of a glassy substance, a thermoplastic resin, a thermosetting resin, and an elastomer resin. These light transmitting materials have hydrogen atoms. Thus, it is possible to decelerate fast neutron rays by elastic scattering. As a result, according to the above configuration, good shielding performance can be exhibited even against fast neutron rays.

In the above configuration, it is preferred that the light transmitting material is at least one selected from a group consisting of a polyvinyl chloride resin, a polystyrene resin, a polyethylene resin, an epoxy resin, a urethane resin, a cyclic polyolefin resin, a polyimide resin, a polycarbonate resin, a polymethyl methacrylate resin, a polyethylene terephthalate resin, an acrylonitrile-butadiene-styrene copolymer resin, a polyvinyl alcohol resin, a polyolefin resin, and a silicon-containing polymer compound.

To solve the problem, a method for producing a neutron shielding material according to the present invention is a method for producing a neutron shielding material formed of a molded product having light transparency, the method comprising a mixing step of mixing a light transmitting material and a boron compound enriched in a boron isotope having a mass number of 10 and a solidifying step of solidifying a mixture of the light transmitting material and the boron compound.

According to the above configuration, as a material of the neutron shielding material, a boron compound enriched in a ¹⁰B isotope having a natural abundance of 19.9 % is used. This makes it possible to produce a neutron shielding material with a suppressed content of boron (that is, the boron compound) as compared with the case of using a boron compound in which ¹¹B is present at a natural abundance of 80.1 %. As a result, it is possible to produce a neutron shielding material having excellent shielding performance against thermal neutron rays while suppressing a decrease in light transparency caused by containing the boron compound.

In the above configuration, it is preferred that an enrichment degree of the boron isotope having a mass number of 10 in the boron compound is 50 % or more. This makes it possible to reduce the content proportion of the boron compound of the ¹¹B isotope, and thus a neutron shielding material in which the content of the boron compound is further suppressed can be produced. As a result, it is possible to produce a neutron shielding material further excellent in light transparency and shielding performance against thermal neutron rays.

In the above configuration, it is preferred that a content of the boron compound is 0.001 mass% or more and 30 mass% or less in terms of boron atom with respect to a total mass of the neutron shielding material. Setting the content of the boron compound to 0.001 mass% or more makes it possible to produce a neutron shielding material that favorably maintains shielding performance against thermal neutron rays. On the other hand, setting the content of the boron compound to 30 mass% or less makes it possible to produce a neutron shielding material that favorably maintains light transparency.

In the above configuration, it is preferred that the boron compound is at least one selected from a group consisting of borane, boroxine, boron trihalide, an inorganic borate, a boron fluoride, a boride, a borohydride compound, a hetero compound, a boronic acid, an organic borate, a boric acid ester, a borinic acid ester, a boronic acid ester, an organic borane, a carborane, a carboronic acid, and a boron-containing complex compound.

In the above configuration, it is preferred that the light transmitting material is any one of a glassy substance, a thermoplastic resin, a thermosetting resin, and an elastomer resin. These light transmitting materials have hydrogen atoms. Thus, it is possible to decelerate fast neutron rays by elastic scattering. As a result, according to the above configuration, it is possible to produce a neutron shielding material exhibiting good shielding performance even against fast neutron rays.

In the above configuration, it is preferred that the light transmitting material is at least one selected from a group consisting of a polyvinyl chloride resin, a polystyrene resin, a polyethylene resin, an epoxy resin, a urethane resin, a cyclic polyolefin resin, a polyimide resin, a polycarbonate resin, a polymethyl methacrylate resin, a polyethylene terephthalate resin, an acrylonitrile-butadiene-styrene copolymer resin, a polyvinyl alcohol resin, a polyolefin resin, and a silicon-containing polymer compound.

In the above configuration, it is preferred that the mixing step is a step of mixing at least one of the boron compound in a powder form, a solution in which the boron compound in a solid form is dissolved in a solvent, a dispersion in which the boron compound in a solid form is dispersed in a dispersion medium, and the boron compound in a liquid form with the light transmitting material.

In the above configuration, it is preferred that the light transmitting material is a two-component thermosetting resin containing a main agent and a curing agent, and the mixing step is a step of mixing the curing agent and the boron compound, and then further adding and mixing the main agent.

### EFFECTS OF THE INVENTION

According to the present invention, it is possible to provide a neutron shielding material having good light transparency and excellent shielding performance against thermal neutron rays, and a method for producing the same.

### BRIEF DESCRIPTION OF THE DRAWINGS

FIG. 1 is a graph showing the relationship between the total thickness and the neutron transmittance of neutron shielding materials according to Examples 1 and 2 and Comparative Examples 1 and 2.
FIG. 2 is an explanatory view schematically showing a camera used for observation of a camera image after irradiation with a thermal neutron ray.
FIG. 3 is a view showing a camera image after irradiation with thermal neutrons in the neutron shielding material according to Example 1.
FIG. 4 is a view showing a camera image after irradiation with thermal neutrons in the neutron shielding material according to Example 2.
FIG. 5 is a view showing a camera image after irradiation with thermal neutrons in the neutron shielding material according to Comparative Example 1.
FIG. 6 is a view showing a camera image after irradiation with thermal neutrons in the neutron shielding material according to Comparative Example 2.

### EMBODIMENTS OF THE INVENTION

### Neutron Shielding Material

A neutron shielding material according to an embodiment of the present invention will be described below.

In the present specification, "neutron" in the neutron shielding material means a fast neutron and a thermal neutron. Thus, in the present specification, "neutron" means either or both of "fast neutron" and "thermal neutron". In the present specification, "fast neutron" and "fast neutron ray" mean a neutron (ray) having an energy level of 0.1 MeV or more. In the present specification, "thermal neutron" and "thermal neutron ray" mean a neutron (ray) having an energy level of less than 0.1 MeV.

The neutron shielding material according to the present embodiment is formed of a molded product containing at least a light transmitting material and a boron compound enriched in a boron (¹⁰B) isotope having a mass number of 10. The neutron shielding material of the present embodiment has light transparency. The neutron shielding material of the present embodiment may be a molded product formed only of a light transmitting material and a boron compound.

Here, in the present specification, "molded product" includes, for example, a plate-shaped molded product and a particulate or pellet molded product. In the present specification, "light transparency" means a property of transmitting at least a part of visible light, and for example, means that the light transmittance with respect to a neutron shielding material in a wavelength range of 400 nm or more and 1000 nm or less is 80 % or more with respect to the case where the neutron shielding material is not present. The light transparency also includes a case where the neutron shielding material is colored in addition to a case where the neutron shielding material is colorless.

In the present embodiment, the boron compound is a boron compound enriched in a ¹⁰B isotope. ¹⁰B has a large neutron absorption cross section (3840 barn). Thus, the boron compound enriched in the ¹⁰B isotope functions as a thermal neutron absorber in the neutron shielding material. The ¹¹B isotope does not react with neutrons.

Here, in the present specification, "enriched in a boron isotope with a mass number of 10" means that the boron isotope having a mass number of 10 is isotopically enriched compared to the natural abundance. In the boron atom, naturally, a boron atom having a mass number of 10 and a boron atom having a mass number of 11 are present at a ratio of ¹⁰B : ¹¹B = 19.9 % : 80.1 %. Thus, "enriched in a boron isotope having a mass number of 10" means enriched such that the abundance ratio of ¹⁰B is more than 19.9 % of the natural abundance.

The enrichment degree of the ¹⁰B isotope in the boron compound is preferably 50 % or more, more preferably 75 % or more, and particularly preferably 90 % or more. Setting the enrichment degree of the ¹⁰B isotope to 50 % or more makes it possible to reduce the content of the boron compound for maintaining good shielding performance against thermal neutron rays. As a result, it is possible to suppress a decrease in light transparency caused by containing the boron compound.

Regarding the content of the boron compound, the lower limit value thereof is preferably 0.001 mass% or more, more preferably 0.005 mass% or more, and particularly preferably 0.01 mass% or more with respect to the total mass of the neutron shielding material. The upper limit value thereof is preferably 30 mass% or less, more preferably 20 mass% or less, and particularly preferably 10 mass% or less with respect to the total mass of the neutron shielding material.

Setting the lower limit value of the content of the boron compound to 0.001 mass% or more makes it possible to maintain good absorption performance against thermal neutron rays and to maintain an excellent shielding effect. On the other hand, setting the upper limit value of the content of the boron compound to 30 mass% or less makes it possible to suppress a decrease in light transparency caused by containing the boron compound and to maintain good light transparency of the neutron shielding material.

The boron compound is not particularly limited as long as the light transparency of the neutron shielding material is not excessively impaired. The boron compound is preferably at least one selected from the group consisting of borane, boroxine, boron trihalide, an inorganic borate, a boron fluoride, a boride, a borohydride compound, a hetero compound, a boronic acid, an organic borate, a boric acid ester, a borinic acid ester, a boronic acid ester, an organic borane, a carborane, a carboronic acid, and a boron-containing complex compound.

Among the boron compounds, the boron-containing inorganic compound is not particularly limited, and examples thereof include: boranes such as boron oxide, boric acid, monoborane, diborane, and ammonia borane; boroxine; boron trihalides such as boron trichloride, boron trifluoride, and boron tribromide; inorganic borates such as sodium metaborate, sodium tetraborate, sodium polyborate, and sodium mercaptododecaborate; boron fluorides such as lithium borofluoride and potassium borofluoride; borides such as aluminum diboride, iron tetraborate, boron carbide, boron nitride, and boron phosphide; borohydride compounds such as aluminum borohydride and sodium borohydride; and hetero compounds such as boraflerene and heterodiamond.

The boron-containing organic compound among the boron compounds is not particularly limited, and examples thereof include: boronic acids such as boron phenylalanine and fluoroborone phenylalanine; organic borates such as lithium bis(oxalate)borate; boric acid esters such as trimethyl borate and triethyl borate; borinic acid esters such as 2-aminoethyl(2-aminoethoxy)diphenylborane and dicyclohexyl(trifluoromethanesulfonyloxy)borane dicyclohexylboron triflate; boronic acid esters such as 2-(2-iodophenyl)-4,4,5,5-tetramethyl-1,3,2-dioxaborolane 1-iodo-2-(4,4,5,5-tetramethyl-1,3,2-dioxaborolane-2-yl)benzene 2-iodophenylboronic acid pinacol; organic boranes such as triethylborane and trimethylborane; carborane, and carboranoic acid.

The boron-containing organic inorganic compound among the boron compounds is not particularly limited, and examples thereof include boron-containing complex compounds such as triethylamine borane, dimethylsulfide borane, boron trifluoride monoethylamine, and boron trifluoride piperidine.

The exemplified boron compounds can be used singly or in combination of two or more thereof.

As the boron compound, a boron compound subjected to a surface treatment for improving dispersibility with respect to the light transmitting material may be used. This makes it possible to prevent the boron compound from being unevenly distributed in the neutron shielding material, and to improve the light transparency of the neutron shielding material and the uniformity thereof. The surface treatment method is not particularly limited, and examples thereof include surface treatment using a silane coupling agent, a titanate coupling agent, a fatty acid, a surfactant, and a modified polymer.

The light transmitting material is preferably any of a glassy substance, a thermoplastic resin, a thermosetting resin, and an elastomer resin. Since these light transmitting materials have hydrogen atoms, the light transmitting materials can decelerate fast neutron rays through elastic scattering. In the neutron shielding material of the present embodiment, the boron compound has performance of absorbing a decelerated fast neutron ray, that is, a thermal neutron ray. As a result, in the neutron shielding material of the present embodiment, excellent shielding performance can be exhibited not only against thermal neutron rays but also against fast neutron rays.

More specific examples of the light transmitting material include at least one selected from the group consisting of quartz (SiO₂) glass, borosilicate glass, polyvinyl chloride resin, polystyrene resin, polyethylene resin, epoxy resin, urethane resin, cyclic polyolefin resin, polyimide resin, polycarbonate resin, polymethyl methacrylate resin, polyethylene terephthalate resin, acrylonitrile-butadiene-styrene copolymer resin, polyvinyl alcohol resin, polyolefin resin, and a silicon-containing polymer compound. These light transmitting materials can be used in any combination with the boron compound exemplified above.

Regarding the content of the light transmitting material, the lower limit value thereof is preferably 70 mass% or more, more preferably 80 mass% or more, and particularly preferably 90 mass% or more with respect to the total mass of the neutron shielding material. Setting the lower limit value of the content of the light transmitting material to 70 mass% or more makes it possible to maintain good absorption performance against fast neutron rays and to maintain an excellent shielding effect.

In the neutron shielding material of the present embodiment, an additive may be contained for the purpose of improving characteristics or suppressing deterioration in characteristics such as mechanical strength, thermal conductivity, thermal expansion coefficient, or weather resistance. Such an additive is not particularly limited as long as the effects of the present invention such as neutron shielding performance and light transparency are not impaired.

Specific examples of the additive include a filler, a diluent, a plasticizer, a thixotropic agent, a moisture absorbent (storage stability improver), an adhesiveness imparting agent, a curing catalyst, an ultraviolet absorber, an antioxidant, an antiaging agent, a physical property modifier, a flame retardant, a tackifier, a sagging inhibitor, a colorant, and a radical polymerization initiator.

The neutron shielding material of the present embodiment is formed of a molded product, and may be in the form of particles or pellets in addition to a plate-like molded product. In the case of a particulate or pellet-like neutron shielding material, it can be further used as a raw material for a neutron shielding product.

When the neutron shielding material is a molded body, the neutron shielding material may be a joined body obtained by joining a molded body containing a boron compound and another molded body made of a light transmitting material not containing a boron compound. It may be a joined body in which molded bodies containing different types of boron compounds are joined to each other. Further, it may be a joined body formed by joining molded bodies containing the same boron compound but having different contents of the boron compound and/or different enrichment degrees of the ¹⁰B isotope.

In these joined bodies, each molded body can be configured as a stack in which at least one layer of each molded body is stacked in any order. The molded bodies may be juxtaposed at any positions in the same plane. In the case of the latter joined body, it is also possible to design the joined body such that the effect of the present invention is exhibited only in a specific region in the plane, and the degree of freedom in design is high, for example. The method for joining the molded bodies is not particularly limited, and examples thereof include a method in which the molded bodies are bonded to each other by heat melding or an adhesive on the joint surfaces of the molded bodies.

### Method for Producing Neutron Shielding Material

Next, a method for producing the neutron shielding material of the present embodiment will be described below.

The method for producing a transparent neutron shielding material of the present embodiment includes at least a mixing step of mixing a light transmitting material and a boron compound, and a solidifying step of solidifying a mixture of the light transmitting material and the boron compound.

The form of the boron compound in the mixing step may be at least one of a case of a solution in which a solid boron compound is dissolved in a solvent, a case of a dispersion in which a solid boron compound is dispersed in a dispersion medium, and a case of a liquid boron compound. When the boron compound has these forms, the boron compound can be uniformly present in the neutron shielding material, and the neutron shielding performance, the light transparency, and in-plane uniformity can be improved. The boron compound may be in the form of powder.

The solvent that dissolves or disperses a solid boron compound or that is compatible with a liquid boron compound is not particularly limited as long as the effects of the present invention such as shielding performance against neutron rays and light transparency are not impaired. Specific examples thereof include water, alcohol, and amine.

The method for mixing the light transmitting material and the boron compound in the mixing step is not particularly limited, and various methods can be adopted. For example, when the light transmitting material is a glassy substance, there is a method in which a solid glassy substance and a solid boron compound are mixed, and then the mixture is heated and thermally melted. The heating time and the heating temperature can be appropriately set according to the types of the solid glassy substance and the solid boron compound.

When the light transmitting material is a thermoplastic resin, examples of the method include a method of kneading a thermoplastic resin and a boron compound using a two-roll mill, a kneader, a Banbury mixer, an extruder, or the like.

Further, when the light transmitting material is a two-component thermosetting resin containing a main agent and a curing agent, examples of the method include a method in which a solid boron compound is dissolved in the curing agent and mixed, and then the main agent is further added and mixed. Even in such a mixing method, the boron compound can be uniformly present in the neutron shielding material, and the neutron shielding performance, the light transparency, and in-plane uniformity can be improved.

Here, the curing agent is added for the purpose of forming a crosslinked structure through addition polymerization of epoxy groups in the presence of a catalyst or forming a crosslinked structure with a compound having two or more epoxy groups and a compound having two or more active hydrogens.

The curing agent is not particularly limited as long as the effects of the present invention such as shielding performance against neutron rays and light transparency are not impaired. Specific examples thereof include chain aliphatic polyamines, cyclic aliphatic polyamines, aliphatic aromatic amines, aromatic amines, polyamides, dicyandiamides, polymercaptans, acid anhydrides, BF₃ complexes, imidazole compounds, phenol novolac, and phenol resol. Examples of the catalyst include cations or anions that release strain energy of a three-membered epoxy group having large strain energy.

The blending amount of the curing agent may be appropriately set depending on the type of the curing agent.

The solidifying step is appropriately performed according to the form of the mixture of the light transmitting material and the boron compound. For example, when the light transmitting material is a glassy substance, and is mixed with a boron compound and thermally melted, the thermally melted mixture is cooled in the solidifying step. Also when the light transmitting material is a thermoplastic resin and the thermoplastic resin and the boron compound are kneaded, the kneaded product of the thermoplastic resin and the boron compound is cooled in the solidifying step.

When the light transmitting material is a two-component thermosetting resin containing a main agent and a curing agent, curing (thermal curing) is performed at room temperature or by heating in the solidifying step. Further, in the solidifying step, post curing may be performed after curing to further accelerate the curing of the epoxy resin.

According to the method for producing a neutron shielding material of the present embodiment, it is possible to easily produce a transparent neutron shielding material having good light transparency and excellent shielding performance at least against thermal neutron rays.

### EXAMPLES

Suitable examples of the present invention will be described in detail below by way of examples. However, materials or mixing amounts described in these examples do not purport to limit the scope of the present invention only to these unless there is a definitive description.

### Example

### Production of Neutron Shielding Material

In the present example, a highly transparent epoxy resin (manufactured by ITW Inc., trade name: Debucon (registered trademark) ET) was used as a light transmitting material, and boric acid enriched in a ¹⁰B isotope (hereinafter, referred to as "¹⁰B enriched boric acid", manufactured by STELLACHEMIFA CORPORATION) was used as a boron compound. The enrichment degree of the ¹⁰B isotope in the ¹⁰B enriched boric acid was 96 %.

First, 45.0 g of a bisphenol A-based epoxy resin as a main agent of the highly transparent epoxy resin and 22.5 g of an aromatic polyamine-based curing agent were weighed. Next, 0.0675 g of the ¹⁰B enriched boric acid was added to and dissolved in the aromatic polyamine-based curing agent. Thereafter, the aromatic polyamine-based curing agent in which the ¹⁰B enriched boric acid was dissolved and the bisphenol A-based epoxy resin were mixed to prepare a mixed liquid (mixing step).

Subsequently, the mixed liquid was poured into a silicone resin mold of 150 mm × 150 mm, and allowed to stand at room temperature for 12 hours to be cured (solidifying step). A neutron shielding material including a molded body having a content of the ¹⁰B enriched boric acid of 1000 ppm (0.1 mass%) and a size of 150 mm (length) × 150 mm (width) × 2.5 mm (thickness) was thus produced.

### Example 2

In this example, the amount of the ¹⁰B enriched boric acid added was changed to 0.3375 g. A neutron shielding material according to this example was produced in the same manner as in Example 1 except for this. The content of the ¹⁰B enriched boric acid in the neutron shielding material was 5000 ppm (0.5 mass%).

### Comparative Example 1

In this comparative example, ¹⁰B enriched boric acid was not added. A neutron shielding material according to this comparative example was produced in the same manner as in Example 1 except for this.

### Comparative Example 2

In this comparative example, boric acid of the natural abundance was used in place of the ¹⁰B enriched boric acid. A neutron shielding material according to this comparative example was produced in the same manner as in Example 2 except for this. The content of the boric acid in the neutron shielding material was 5000 ppm (0.5 mass%).

### Measurement of Neutron Shielding Performance

A thermal neutron beam (thermal neutron flux: 4.0 × 10⁵ n/cm²/s at 1 MW) was used as a neutron ray source, and the neutron shielding material produced in each example or each comparative example was disposed between the neutron ray source and a LiCaF scintillator. The neutron shielding material to be disposed was adjusted so as to have a predetermined thickness as a whole by overlapping a plurality of neutron shielding materials.

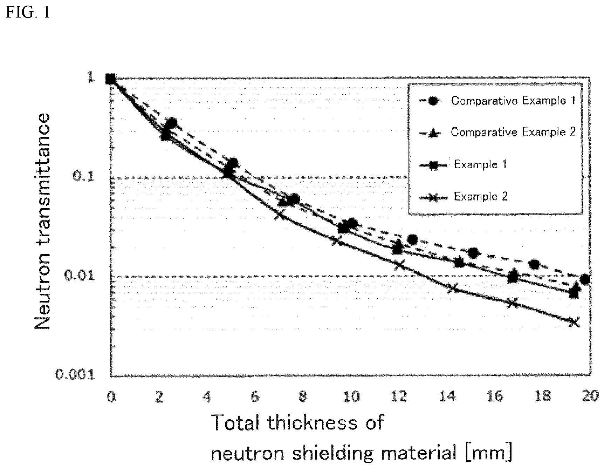

Subsequently, the LiCaF scintillator was irradiated with the thermal neutron beam, and the number of events for the thermal neutron ray that had passed through the neutron shielding material was measured, thereby calculating the neutron transmittance for the thermal neutron ray for each thickness. The results are shown in FIG. 1.

As can be seen from FIG. 1, as a result of evaluating the shielding performance against thermal neutron rays, it has become clear that the neutron transmittance of the thermal neutron ray in the neutron shielding materials of Examples 1 and 2 is lower than that in Comparative Examples 1 and 2, and the thermal neutron ray is effectively shielded.

### Evaluation of Light Transparency

For the neutron shielding materials prepared in Examples 1 and 2 and Comparative Examples 1 and 2, the total light transmittance in the range of 400 nm to 1000 nm was measured using an ultraviolet visible near infrared spectrophotometer (manufactured by JASCO Corporation, trade name: V-670ODS), and the light transparency was evaluated. In the measurement of the total light transmittance, as shown in Table 1, a plurality of neutron shielding materials were stacked to adjust the total thickness as a whole, and the light transmittance for each total thickness was measured. The measurement results are shown in Table 1.

**[Table 1]**

| Total thickness of neutron shielding material (mm) | Total light transmittance (%) | | | |
|---|---|---|---|---|
| | Example 1 | Example 2 | Comparative Example 1 | Comparative Example 2 |
| 0.0 | 100.0 | 100.0 | 100.0 | 100.0 |
| 5.0 | 87.1 | 86.9 | 87.2 | 87.0 |
| 10.0 | 86.7 | 86.1 | 86.0 | 86.5 |
| 15.0 | 84.2 | 83.4 | 85.0 | 83.2 |
| 20.0 | 83.7 | 84.1 | 81.3 | 82.1 |

As can be seen from Table 1, in the neutron shielding materials of Examples 1 and 2, the total light transmittance was 80 % or more regardless of the total thickness, and it was confirmed that the materials had good light transparency. That is, it has become clear that even when the ¹⁰B enriched boric acid is contained, the original light transparency of the epoxy resin which is a light transmitting material is not lost.

### Observation of Camera Image after Irradiation with Thermal Neutron Ray

Next, the shielding performance against thermal neutron rays in the neutron shielding material of each of Example and Comparative Example was evaluated by observing a change in an image captured by a camera.

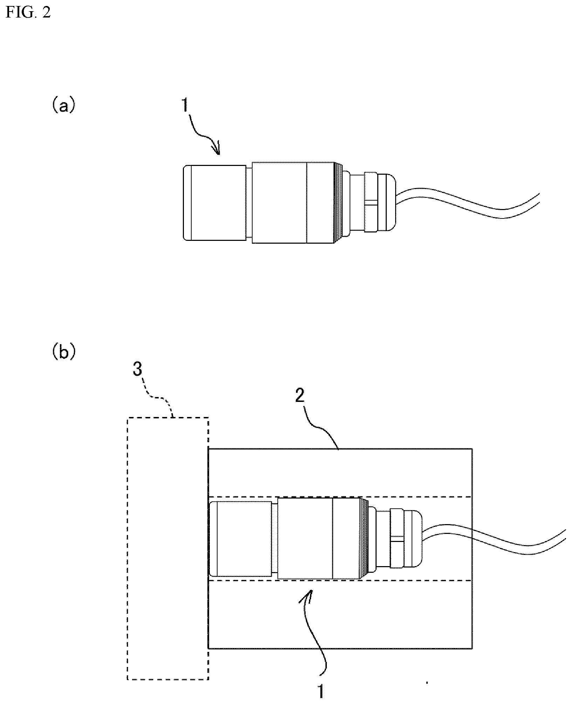

First, a method for observing a change in an image of a camera will be described with reference to FIG. 2. FIG. 2 is an explanatory view schematically showing a camera used for observation of a camera image after irradiation with a thermal neutron ray.

As illustrated in FIG. 2(a), a network camera 1 (product name: P1214E, imaging element: CCD, manufactured by Axis Communications AB) was used as an observation camera to observe a change in an image captured by the camera. In addition, as shown in FIG. 2(b), the periphery of the network camera 1 was covered with a polyethylene cover 2 to prevent the thermal neutron ray from being emitted from the left and right side surfaces, the upper surface, and the lower surface.

As the polyethylene cover 2, a polyethylene cover containing 50 mass% of lithium fluoride with respect to the total mass of the polyethylene cover 2 was used. One neutron shielding material 3 prepared in each example or each comparative example was disposed on the front surface of the camera to shield the front surface of the camera.

Next, the front surface of the camera was irradiated with a neutron flux of 3.7 × 10¹¹ pieces/cm² using the thermal neutron beam as a neutron source.

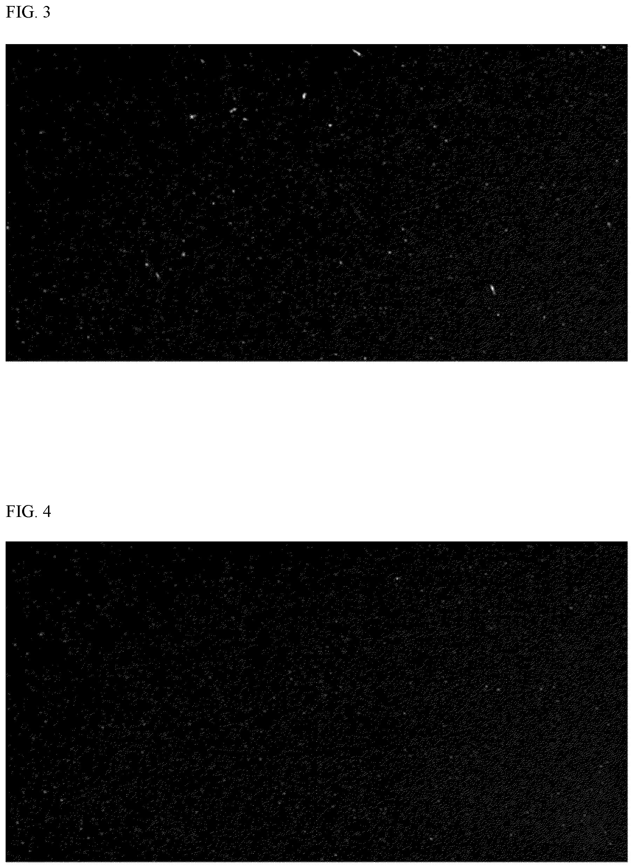

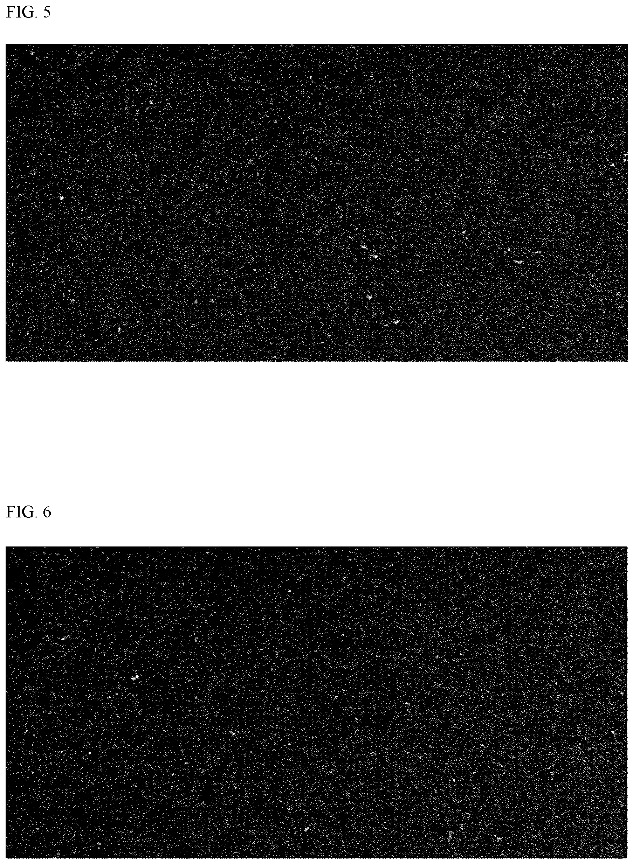

The camera images after irradiation are shown in FIGS. 3 to 6. In addition, the number of dots in the entire region of the imaged screen was measured, and the number of dots per unit area (number of dots/cm²) was calculated. The results are shown in Table 2.

**[Table 2]**

| | Example 1 | Example 2 | Comparative Example 1 | Comparative Example 2 |
|---|---|---|---|---|
| Number of dots per unit area | 351 | 278 | 508 | 401 |

It was confirmed that no dots were observed on the screen in the camera image when the screen was not irradiated with the thermal neutron ray, but dots were generated on the screen in the camera image after irradiation with the thermal neutron ray (see FIGS. 3 to 6). This is considered to be because the camera element of the network camera 1 was damaged by the emitted thermal neutron ray. However, the images of the camera covered with the neutron shielding materials of Examples 1 and 2 had fewer dots than the images of the camera covered with the neutron shielding materials of Comparative Examples 1 and 2 (see FIGS. 3 to 6 and Table 2).

From these results, it was confirmed that the neutron shielding materials according to Examples 1 and 2 had excellent shielding performance against thermal neutron rays. As a result, it was shown that the neutron shielding materials according to Examples 1 and 2 are useful for, for example, a protective member for a camera used in a neutron generation facility, and the like, and the materials can prevent deterioration of a camera image due to irradiation with a thermal neutron ray.

Similarly, the shielding performance of the neutron shielding materials against thermal neutron rays was evaluated by observing a change in an image taken by a different camera.

As for the method for observing the image change of the camera, the observation camera to be used was changed to a video camera (manufactured by Panasonic Corporation, trade name; HC-V480MS, imaging element: CMOS). As shown in FIG. 2(b), one neutron shielding material 3 prepared in Example 2 or Comparative Example 1 was disposed on the front surface of the camera to shield the front surface of the camera.

Next, the front surface of the camera was irradiated with a neutron flux of 3.7 × 10¹¹ pieces/cm² using the thermal neutron beam as a neutron source.

After the irradiation, in the camera covered with the neutron shielding material of Comparative Example 1, a phenomenon that noise was immediately generated in the camera image or the camera blacked out occurred. This is because the imaging element was damaged by the emitted thermal neutron beam. This image disturbance occurred more quickly than when the network camera was used. On the other hand, in the camera covered with the neutron shielding material of Example 2, no noise or blackout phenomenon occurred in the camera image even when the camera was irradiated with the thermal neutron ray.

From these results, it was confirmed that the neutron shielding material according to Example 2 had excellent shielding performance against thermal neutron rays. As a result, it was shown that the neutron shielding material according to Examples 2 is useful for, for example, a protective member for a camera used in a neutron generation facility, and the like, and the materials can prevent deterioration of a camera image due to irradiation with a thermal neutron ray. In particular, this effect is remarkable in a camera in which the control system of the imaging element is finer and damage occurs quickly.

### INDUSTRIAL APPLICABILITY

The neutron shielding material of the present invention has good light transparency and excellent shielding performance at least against thermal neutron rays, and can be widely applied to members requiring visibility and neutron blocking properties. Therefore, the industrial applicability of the present invention is extremely high.

### LIST OF REFERENCE SIGNS

- 1:: Network camera
- 2:: Polyethylene cover
- 3:: Neutron shielding material

## Claims

1. A neutron shielding material comprising:
- a light transmitting material; and
- a boron compound enriched in a boron isotope having a mass number of 10, the neutron shielding material being formed of a molded product having light transparency.

2. The neutron shielding material according to claim 1,
wherein an enrichment degree of a boron isotope having a mass number of 10 in the boron compound is 50 % or more.

3. The neutron shielding material according to claim 1,
wherein a content of the boron compound is 0.001 mass% or more and 30 mass% or less in terms of boron atom with respect to a total mass of the neutron shielding material.

4. The neutron shielding material according to claim 1,
wherein the boron compound is at least one selected from a group consisting of a boron oxide, a boric acid, borane, boroxine, boron trihalide, an inorganic borate, a boron fluoride, a boride, a borohydride compound, a hetero compound, a boronic acid, an organic borate, a boric acid ester, a borinic acid ester, a boronic acid ester, an organic borane, a carborane, a carboronic acid, and a boron-containing complex compound.

5. The neutron shielding material according to claim 1,
wherein the light transmitting material is any one of a glassy substance, a thermoplastic resin, a thermosetting resin, and an elastomer resin.

6. The neutron shielding material according to claim 5,
wherein the light transmitting material is at least one selected from a group consisting of a polyvinyl chloride resin, a polystyrene resin, a polyethylene resin, an epoxy resin, a urethane resin, a cyclic polyolefin resin, a polyimide resin, a polycarbonate resin, a polymethyl methacrylate resin, a polyethylene terephthalate resin, an acrylonitrile-butadiene-styrene copolymer resin, a polyvinyl alcohol resin, a polyolefin resin, and a silicon-containing polymer compound.

7. A method for producing a neutron shielding material formed of a molded product having light transparency, the method comprising:
- a mixing step of mixing a light transmitting material and a boron compound enriched in a boron isotope having a mass number of 10; and
- a solidifying step of solidifying a mixture of the light transmitting material and the boron compound.

8. The method for producing a neutron shielding material according to claim 7, wherein an enrichment degree of the boron isotope having a mass number of 10 in the boron compound is 50 % or more.

9. The method for producing a neutron shielding material according to claim 7, wherein a content of the boron compound is 0.001 mass% or more and 30 mass% or less in terms of boron atom with respect to a total mass of the neutron shielding material.

10. The method for producing a neutron shielding material according to claim 7, wherein the boron compound is at least one selected from a group consisting of borane, boroxine, boron trihalide, an inorganic borate, a boron fluoride, a boride, a borohydride compound, a hetero compound, a boronic acid, an organic borate, a boric acid ester, a borinic acid ester, a boronic acid ester, an organic borane, a carborane, a carboronic acid, and a boron-containing complex compound.

11. The method for producing a neutron shielding material according to claim 7, wherein the light transmitting material is any one of a glassy substance, a thermoplastic resin, a thermosetting resin, and an elastomer resin.

12. The method for producing a neutron shielding material according to claim 11, wherein the light transmitting material is at least one selected from a group consisting of a polyvinyl chloride resin, a polystyrene resin, a polyethylene resin, an epoxy resin, a urethane resin, a cyclic polyolefin resin, a polyimide resin, a polycarbonate resin, a polymethyl methacrylate resin, a polyethylene terephthalate resin, an acrylonitrile-butadiene-styrene copolymer resin, a polyvinyl alcohol resin, a polyolefin resin, and a silicon-containing polymer compound.

13. The method for producing a neutron shielding material according to claim 7, wherein the mixing step is a step of mixing at least one of the boron compound in a powder form, a solution in which the boron compound in a solid form is dissolved in a solvent, a dispersion in which the boron compound in a solid form is dispersed in a dispersion medium, and the boron compound in a liquid form with the light transmitting material.

14. The method for producing a neutron shielding material according to claim 7, wherein
the light transmitting material is a two-component thermosetting resin containing a main agent and a curing agent, and
the mixing step is a step of mixing the curing agent and the boron compound, and then further adding and mixing the main agent.
